Europäisches Patentamt

European Patent Office

Office européen des brevets

(19)

(11) Publication number: **0 244 107**
A1

(12) **EUROPEAN PATENT APPLICATION**

(21) Application number: 87303110.8

(22) Date of filing: 09.04.87

(51) Int. Cl.⁴: **C08K 5/00** , C08K 5/10 ,
C08K 5/37 , C08L 21/00

(30) Priority: 18.04.86 GB 8609542

(43) Date of publication of application:
04.11.87 Bulletin 87/45

(84) Designated Contracting States:
BE DE ES FR GB IT SE

(71) Applicant: BP Chemicals Limited
Belgrave House 76 Buckingham Palace Road
London, SW1W 0SU(GB)

(72) Inventor: Clutterbuck, Paul Geoffrey
BP Chemicals Limited Hayes Road
Sully Penarth South Glamorgan CF6 2YU(GB)
Inventor: Wilson, Alan Stuart
BP Chemicals Limited Hayes Road
Sully Penarth South Glamorgan CF6 2YU(GB)

(74) Representative: Krishnan, Suryanarayana
Kalyana et al
BP INTERNATIONAL LIMITED Patents &
Agreements Division Chertsey Road
Sunbury-on-Thames Middlesex TW16
7LN(GB)

(54) Plasticiser compositions.

(57) This invention relates to a plasticiser composition suitable for use in rubber formulations. The plasticiser comprises a trimellitate ester, an aliphatic linear dicarboxylate, a dialkylthiodicarboxylate and an antioxidant. The plasticiser compositions of this invention perform well at both low and high temperatures without adversely affecting the other desirable characteristics of the rubber or elastomer being plasticised.

EP 0 244 107 A1

## PLASTICISER COMPOSITIONS

The present invention relates to plasticiser compositions, especially for use with elastomers and synthetic rubbers.

Ester plasticisers play a very important role in rubber technology. They are used particularly in acrylonitrile-butadiene rubbers (NBR) and chloroprene rubbers (CR) to improve processability, low temperature properties and to balance the swelling effects of fuels and oils with which they come into contact. Ester plasticisers also enable larger quantities of fillers to be added during compounding of rubber without unduly stiffening the rubber compound thereby facilitating use of relatively lower processing temperatures. Lower processing temperature also reduces the risk of premature vulcanisation. Ester plasticisers not only reduce compounding cost but also markedly improve the extrusion and calendering characteristics of the rubber compound.

Selection of an ester plasticiser for a particular use is often difficult and confusing in view of the vast number of esters available for this purpose. It is even more difficult to select an ester or mixture of esters which retains its plasticising function equally well, for instance, at both low and high temperatures.

It is an object of the present invention to formulate a composition comprising esters and anti-oxidants which perform well as a plasticiser at both low and high temperatures without adversely affecting the other desirable characteristics outlined above, especially for synthetic rubbers and elastomers.

Accordingly, the present invention is a composition comprising
(a) a trimellitate ester
(b) a saturated aliphatic, substantially linear dicarboxylate ester derivable by esterifying either a dicarboxylic acid with at least one monohydric alcohol or a monocarboxylic acid with at least one dihydric alcohol,
(c) a dialkyl ester of a thiodicarboxylic acid selected from thiodiacetic, thiodipropionic and thiodibutyric acids in which ester each alkyl group has at least 12 carbon atoms, and
(d) an antioxidant comprising a hindered phenol which has a molecular weight of 200-700.

More specifically, the trimellitate ester (a) in the compositions of the present invention is suitably an ester of one or more alcohols having 6-11 carbon atoms. The alcohols may be linear, branched chain or mixtures of both. Esters of the proprietary product "Linevol 79" (Registered Trade Mark) are preferred. Trimellitate esters which are liquids under ambient conditions are most preferred.

The aliphatic, substantially linear dicarboxylate esters (b) referred to above in the compositions of the present invention can be derived by esterifying either a dicarboxylic acid with at least one monohydric alcohol or a monocarboxylic acid with at least one dihydric alcohol.

Where a dicarboxylic acid is esterified with a monohydric alcohol, the dicarboxylic acid is suitably selected from adipic, succinic, glutaric, mixtures of adipic/glutaric/succinic (known as nylonic acids), azelaic and sebacic acids. Adipic acid is preferred. In this case the monohydric alcohol used is suitably selected from primary linear and/or branched alcohols which have from $C_4$ to $C_{13}$ carbon atoms, preferably from $C_7$ to $C_{11}$ carbon atoms including ethoxylated butanes containing from 2 to 4 ethylene oxide units. Specific examples of these are: butanol, isobutanol, n-hexanol, n-heptanol, iso-heptanol, 2-ethylhexanol, iso-octanol, "Linevol" 79 (linear $C_7$, $C_8$, $C_9$), "Linevol" 911 (linear $C_9$, $C_{10}$, $C_{11}$), iso-nonanol, 3,5,5-trimethylhexanol, iso-decanol, "Alfol" 610 (linear $C_6$, $C_8$, $C_{10}$), "Alfol" 810 (linear $C_8$, $C_{10}$), "Alfol" 1012 (linear $C_{10}$, $C_{12}$), tridecanol, undecanol and ethoxylated butanols. "Alfol" and "Linevol" are Registered Trade Marks. "Linevol" 79 is the preferred monohydric alcohol component.

Where a monocarboxylic acid is esterified with a dihydric alcohol, the monocarboxylic acid is suitably selected from linear and/or branched $C_7$-$C_{10}$ acids. Specific examples of these are: n-heptanoic, iso-heptanoic, iso-octanoic, 2-ethylhexanoic, caprylic, capric, mixtures of caprylic/capric, and pelargonic acids. In this case the dihydric alcohol is selected from di-ethylene glycol, tri-ethylene glycol, tetra-ethylene glycol and mixtures of these. Such dicarboxylate esters suitably have a molecular weight of 300-600, preferably from 350-600. Adipate esters are preferred.

The dialkyl thiodicarboxylate component (c) referred to above in the compositions of the present invention is suitably selected from dilauryl, ditridecyl, dimyristyl and distearyl thiodicarboxylates. Of these, the thiodipropionate esters are preferred, especially di-tridecyl thiodipropionate.

The antioxidant (d) in the compositions of the present invention can be any of the hindered phenols well known for this purpose to those skilled in the art. However, the molecular weight of the hindered phenol should be from 200-700, preferably from 210-670. Examples of such hindered phenols include Bisphenol A, Wingstay S (ex Goodyear), Irganox 1010 (ex-Ciba Geigy) and Topanol CA (ex-ICI).

The compositions of the present invention suitably contain the components (a) to (d) above in the following percentages by weight of the total composition.

| Component | | General Range | Preferred Range |
|---|---|---|---|
| (a) | Trimellitate ester | 35-80 | 60-76 |
| (b) | Aliphatic linear dicarboxylate | 10-30 | 12-20 |
| (c) | Dialkyl thiodicarboxylate | 10-30 | 10-20 |
| (d) | Antioxidant | 0.1-10 | 0.25-0.5 |

The final composition may be a liquid or solid but is preferably a liquid.

The compositions referred to above can be used as plasticizers in elastomer or synthetic rubber compositions.

The plasticiser composition is suitably present in the elastomer or synthetic rubber composition in an amount ranging from 5-35 parts, preferably from 10-20 parts per hundred parts of the total elastomer or synthetic rubber composition.

Examples of elastomers and synthetic rubbers that may be plasticised by the compositions of the present invention include acrylonitrile-butadiene rubbers (also known as NBR), chloroprene rubbers, polyethylenes e.g. Hypalon (Registered Trade Mark), chlorinated polyethylene and styrene-butadiene rubbers (SBR).

The compositions of the present invention retain their plasticising effect on elastomers and synthetic rubbers containing the same over a wide range of temperatures without adversely affecting their other desirable properties.

The present invention is further illustrated with reference to the following Examples.

Example 1

(a) 0.5% by weight of Bisphenol A was dissolved in a trimellitate ester, sold commercially as TL79T ex BP Chemicals, based on predominantly linear $C_7$, $C_8$ and $C_9$ alcohols (commercially sold as "Linevol" 79) by stirring for 1 hour at 70°C.

700 g of this mixture was thoroughly mixed at room temperature with 150 g of adipate, ester sold commercially as DL79A ex-BP Chemicals, based on predominantly linear $C_7$, $C_8$ and $C_9$ alcohols (commercially sold as "Linevol" 79) and 150g of di-tridecyl thiodipropionate. The resultant composition was a clear pale yellow liquid with the following physical properties:

Specific gravity at 15°C/15°C 0.978

Refractive index $n_D^{20}$ 1.478

Viscosity at 25°C cP 60.8

Flash point, (Pensky Martens, (Open Cup °C) 182

(b) A similar composition to that in (a) above was prepared and its physical properties again determined. The product was a pale yellow liquid miscible with most organic solvents but immiscible with water. Typical values for some physical properties are as follows:-

3

| | | |
|---|---|---|
| Density at 20°C | kg/litre | 0.973 |
| Flashpoint, Pensky Martens closed cup | °C | 182 |
| Pour point, ASTM | °C | −39 |
| Refractive index $n_D^{20}$ | | 1.478 |
| Absolute viscosity at 25°C | cP | 61 |
| Solubility at 20°C | | |
| plasticiser in water | microg/g water | 10 max |
| water in plasticiser | g/kg plasticiser | 2 |

Example 2

The composition described in (a) above was used to prepare a plasticized synthetic rubber formulation and the resultant product was compared with the same rubber composition (i) no plasticizer and (ii) a conventional di-2-ethylhexylsebacate (DOS) for its performance. The rubber formulation used and the results achieved are tabulated below. Quantities referred to in the formulation are parts by weight.

From the results below it is clear that the plasticizer liquid performs satisfactorily as a plasticizer in synthetic rubber compounds required to operate over a wide range of temperatures. Synthetic rubber compounds plasticised with the compositions of the present invention also show excellent resistance to volatile loss and oxidation under heat ageing conditions.

| | |
|---|---|
| Breon** N36C50* (ex BP Chemicals Limited) | 100.00 |
| Naugard**445 – Paradicumyl diphenylamine (ex Uniroyal) | 4.0 |
| MC Sulphur | 0.4 |
| Hisil**233 – Silica fillers (ex PPG Industries Inc) | 10.0 |
| Hisil** EP | |
| Stearic acid | 0.5 |
| Zinc oxide | 5.0 |
| Maglite**D – Magnesium oxide (ex Croxton & Garry) | 10.0 |
| CBS –n–cyclohexyl-2-benzothiazolesulphinamide (ex Vulnax) | 2.0 |
| TMTD – Tetramethylthiuram disulphide (ex Vulnax) | 1.25 |
| TETD – Tetraethyl thiuram disulphide (ex Vulnax) | 1.25 |
| Plasticizer (according to the invention) | 15.0 |

*50 mooney, 36% acylonitrile polymer in the nitrile rubber

**Registered Trade Mark

4

## Table 1 – Performance in Nitrile Rubber

|  |  | No plasticizer | Bisoflex 234 | DOS |
|---|---|---|---|---|
| Mooney plasticity, 100°C | ML 1+4 | 81 | 51 | 46 |
| Hardness | IRHD | 66 | 59 | 61 |
| Tensile strength | MPa | 16.4 | 12.1 | 10.7 |
| Elongation at break | % | 590 | 630 | 570 |
| Low temp. flexibility °C |  | -16 | -23 | -24 |
| **Oven ageing, 14 days @ 135°C** |  |  |  |  |
| Tensile strength | MPa | 17.9 | 11.7 | 11.2 |
| Elongation at break | % | 300 | 390 | 255 |
| Volatile loss | % | 3.2 | 4.5 | 5.1 |
| Hardness change |  | +13 | +13 | +14 |
| **Oven ageing, 70 hrs @ 150°C** |  |  |  |  |
| Tensile strength | MPa | 10.9 | 14.2 | 12.3 |
| Elongation at break | % | 490 | 615 | 460 |
| Volatile loss | % | 3.8 | 4.5 | 4.8 |
| Hardness change |  | +7 | +5 | +5 |
| **ASTM 1 Oil, 70 hrs @ 100°C** |  |  |  |  |
| Tensile strength | MPa | 17.7 | 14.1 | 12.5 |
| Elongation at break | % | 565 | 620 | 560 |
| Volatile loss | % | -2 | -10 | -11 |
| Hardness change |  | +3 | +7 | +8 |
| **ASTM 3 Oil, 70 hrs @ 100°C** |  |  |  |  |
| Tensile strength | MPa | 17.0 | 11.5 | 9.8 |
| Elongation at break | % | 530 | 550 | 500 |
| Volatile loss | % | +9 | 0 | -1 |
| Hardness change |  | -8 | -4 | -3 |
| **Distilled water, 70 hrs @ 100°C** |  |  |  |  |
| Tensile strength | MPa | 19.5 | 15.2 | 14.0 |
| Elongation at break | % | 540 | 600 | 560 |
| Volatile loss | % | +14 | +15 | +15 |
| Hardness change |  | +4 | +2 | +2 |
| **ASTM Fuel B, 70 hrs @ 23°C** |  |  |  |  |
| Tensile strength |  | 6.0 | 4.4 | 3.9 |
| Elongation at break | % | 310 | 375 | 315 |
| Volatile loss | % | +31 | +19 | +17 |
| Hardness change |  | -16 | -11 | -9 |

(1) Gehman test to BS 903, Part A13. The low temperature flex point is the temperature at which the modulus of rigidity is 10 times its values at 20°C.

1 Megapascal (MPa) = Meganewton per metre$^2$ (MN/m$^2$) = 145 lb/in$^2$

## Claims

1. A composition comprising
(a) a trimellitate ester
(b) a saturated aliphatic, substantially linear dicarboxylate ester derivable by esterifying either a dicarboxylic acid with at least one monohydric alcohol or a monocarboxylic acid with at least one dihydric alcohol,
(c) a dialkyl ester of a thiodicarboxylic acid selected from thiodiacetic, thiodipropionic and thiodibutyric acids in which ester each alkyl group has at least 12 carbon atoms, and
(d) an antioxidant comprising a hindered phenol which has a molecular weight of 200-700.

2. A process according to claim 1 wherein the trimellitate ester (a) is an ester of one or more alcohols having 6-11 carbon atoms.

3. A process according to claim 1 or 2 wherein the alcohols are linear, branched chain or mixture of both.

4. A composition according to any one of the preceding claims wherein trimellitate esters are liquids under ambient conditions.

5. A composition according to any one of the preceding claims wherein the aliphatic, substantially linear dicarboxylate esters (b) are derivable by esterifying either a dicarboxylic acid with a monohydric alcohol or a monocarboxylic acid with a dihydric alcohol.

6. A composition according to claim 5 wherein in a dicarboxylic acid esterified with a monohydric alcohol, the dicarboxylic acid is selected from adipic, succinic, glutaric, mixtures of adipic/glutaric/succinic (known as nylonic acids), azelaic and sebacic acids, and the monohydric alcohol used is selected from primary linear and/or branched alcohols which have from $C_4$ to $C_{13}$ carbon atoms, including ethoxylated butanes containing from 2 to 4 ethylene oxide units.

7. A composition according to claim 5 wherein in a monocarboxylic acid esterified with a dihydric alcohol, the monocarboxylic acid is selected from linear and/or branched $C_7$-$C_{10}$ acids and the dihydric alcohol is selected from di-ethylene glycol, tri-ethylene glycol, tetra-ethylene glycol and mixtures of these.

8. A composition according to any one of the preceding claims wherein the dicarboxylate esters have a molecular weight of 300-600.

9. A composition according to any one of the preceding claims wherein the dialkyl thiodicarboxylate component (c) is selected from dilauryl, ditridecyl, dimyristyl and distearyl thiodicarboxylates.

10. A composition according to any one of the preceding claims wherein the thiodicarboxylate is a thiodipropionate.

11. A composition according to any one of the preceding claims wherein the antioxidant (d) is a hindered phenol having a molecular weight from 210-670.

12. A composition according to any one of the preceding claims wherein the components (a) to (d) are present in the following percentages by weight of the total composition.

| Component | | General Range | Preferred Range |
|---|---|---|---|
| (a) | Trimellitate ester | 35-80 | 60-76 |
| (b) | Aliphatic linear dicarboxylate | 10-30 | 12-20 |
| (c) | Dialkyl thiodicarboxylate | 10-30 | 10-20 |
| (d) | Antioxidant | 0.1-10 | 0.25-0.5 |

13. An elastomer or synthetic rubber composition comprising a plasticizer composition wherein the plasticizer composition is a composition claimed in any one of the preceding claims 1-12.

14. An elastomer or synthetic rubber composition according to claim 13 wherein the plasticizer composition is present in an amount from 10-20 parts per hundred parts of the total elastomer or synthetic rubber composition.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 100 356 (MONSANTO)<br><br>* Claim 1; page 6, line 52 *<br><br>--- | | C 08 K 5/00<br>C 08 K 5/10<br>C 08 K 5/37<br>C 08 L 21/00 |
| A | GB-A-1 005 169 (DISTILLERS CO.)<br><br>* Claim 1 *<br><br>--- | | |
| A | DE-A-2 759 162 (BASF)<br><br>* Claims 1,3 *<br><br>--- | | |
| A | C.M. BLOW et al.: "Rubber technology and manufacture", 2nd edition, 1982, page 233, Butterworth Scientific, London, GB<br>* Page 233, line 10 *<br><br>----- | | |

|  |  |
|---|---|
| | **TECHNICAL FIELDS SEARCHED (Int. Cl.4)**<br><br>C 08 K<br>C 08 L |

The present search report has been drawn up for all claims

| Place of search | Date of completion of the search | Examiner |
|---|---|---|
| THE HAGUE | 06-08-1987 | VAN HUMBEECK F.W.C. |

EPO Form 1503 03 82